# EUROPEAN PATENT SPECIFICATION

(11) **EP 3 209 404 B1**
(45) Date of publication and mention of the grant of the patent: **17.02.2021**
(21) Application number: 15849321.3
(22) Date of filing: 06.10.2015
(51) Int. Cl.: B01D 17/02, B01D 36/00, B01D 29/56, B01D 29/60, B01D 35/18

(54) **INTEGRATED SMART FUEL FILTRATION SYSTEM**
INTEGRIERTES INTELLIGENTES BRENNSTOFFFILTRATIONSSYSTEM
SYSTÈME DE FILTRATION DE CARBURANT INTELLIGENT INTÉGRÉ

(30) Priority: 08.10.2014 IN 5044DE2014
(43) Date of publication of application: 30.08.2017
(73) Proprietor: Cummins Filtration IP, Inc., Columbus, IN 47201 (US)
(72) Inventor: MALGORN, Gérard, F-29500 Ergué Gabéric (FR); SEKAR, Mano, Durham, Noth Carolina 27705 (US); YESANE, Swati S., Kolhapur 416505 (IN); SEDZIOL, Jon, Columbus, Indiana 47201 (US); JIANG, Zemin, Cookeville, Tennessee 38506 (US); VAIDYA, Abhijeet, Columbus, Indiana 47201 (US); SHIMPI, Abhijit, Hermitage, Tennessee 37076 (US); ROBINSON, Casey, Columbus, Indiana 47201 (US)
(74) Representative: Dauncey, Mark Peter
(86) International application number: PCT/US2015/054214
(87) International publication number: WO 2016/057493

(56) References cited:
- WO-A1-2013/135440
- US-A- 5 458 767
- US-A1- 2004 118 764
- US-A1- 2004 118 764
- US-A1- 2007 100 513
- US-A1- 2011 259 802
- US-A1- 2011 259 802
- US-A1- 2014 017 922
- US-A1- 2014 017 922
- US-B1- 6 361 684
- US-B2- 7 527 739
- US-B2- 8 290 659
- US-B2- 8 440 083

## Description

### FIELD

The present application relates generally to fuel water separator filter systems.

### SUMMARY

Embodiments of this disclosure relate generally to an integrated fuel water separator filter system. More specifically, the embodiments relate to a fuel water separator filter that includes electronic sensors to monitor the life of the fuel water separator filter.

The fuel water separator filter system according to claim 1 includes a fuel water separator with a first fuel water separator filter assembly and a second fuel water separator assembly. The first fuel water separator includes an electronic module that contains a fuel heater, a water-in-fuel sensor, and a differential pressure sensor.

### BRIEF DESCRIPTION OF THE DRAWINGS

References are made to the accompanying drawings that form a part of this disclosure, and which illustrate the embodiments in which the systems and methods described in this Specification can be practiced.
FIG. 1 is a schematic diagram of an integrated fuel water separation filter system, according to some embodiments.
FIG. 2 is a perspective view of a fuel water separator, according to some embodiments.
FIG. 3 is a cross-sectional view of a fuel water separator, according to some embodiments.
FIG. 4 is a first perspective view of an electronic module of a fuel water separator, according to some embodiments.
FIG. 5 is a perspective view of the electronic module of FIG. 4.
FIG. 6 is a cross-sectional view of an electronic module of a fuel water separator, according to some embodiments.
FIG. 7 is a perspective view of a water-in-fuel sensor pin, according to some embodiments.
FIG. 8 is a cross-sectional view of a water-in-fuel sensor pin, according to some embodiments.
FIG. 9 is a cross-sectional view of a fuel water separator, according to some embodiments.
FIG. 10 is a perspective view of an electronic intermediary for use in the electronic module of FIG. 4, according to some embodiments.
FIGS. 11A-11B are perspective views of alternative configurations of an electronic intermediary for use in the electronic module of FIG. 4.

Like reference numbers represent like parts throughout.

### DETAILED DESCRIPTION

Embodiments of this disclosure relate generally to an integrated fuel water separator filter system. More specifically, the embodiments relate to a fuel water separator filter that includes electronic sensors to monitor the life of the fuel water separator filter.

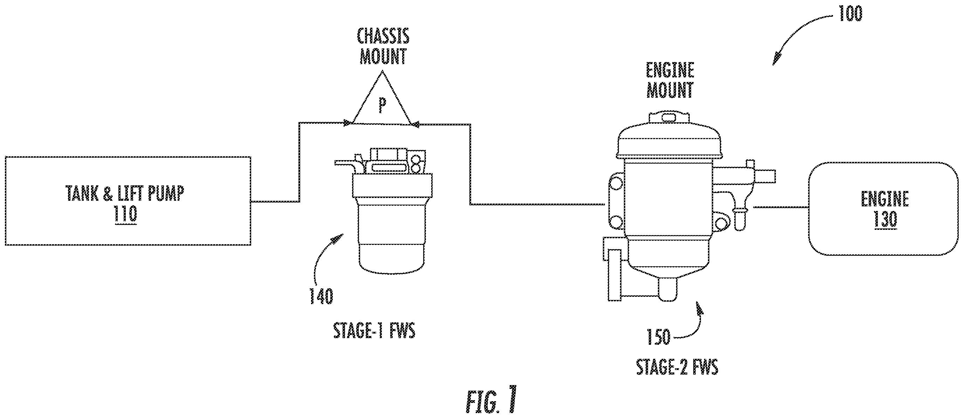

In one embodiment, the fuel water separator filter system is configured to remove water from fuel before the fuel is supplied to an engine. The fuel may be diesel fuel, and the engine may be a diesel engine. The integrated fuel water separator filter system 100 may include a first fuel water separator filter and a second fuel water separator filter. As shown in Fig. 1, fuel may be supplied to the first fuel water separator filter 140 from a fuel tank 110 by a fuel pump, such as a lift pump. The filtered fuel from the first fuel water separator filter 140 may then be supplied to the second fuel water separator filter 150, and the filtered fuel from the second fuel water separator filter 150 may be supplied to an engine 130. The first fuel water separator filter 140 may be mounted to a chassis to which the engine 130 and the fuel tank 110 are mounted. The chassis may be the chassis of a vehicle. The second fuel water separator filter 150 may be mounted to the engine 130, such as to the block of the engine 130.

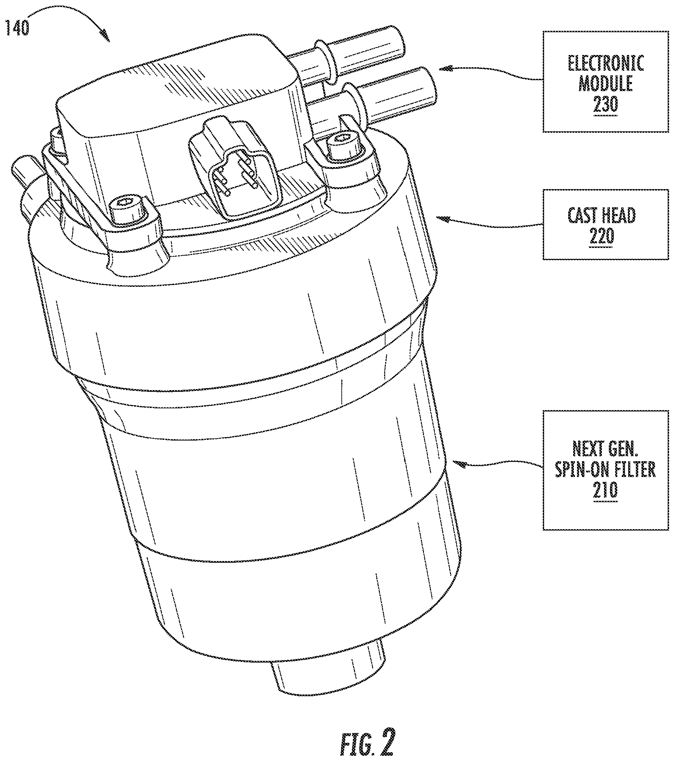

As shown in Fig. 2, the first fuel water separator filter 140 includes an electronic module 230, a filter head 220, and a filter 210. The filter head 220 may be a formed by a single casting operation, and may be formed from any suitable material, such as a polymer or metal material. According to some embodiments, the filter head 220 may be cast aluminum. The filter head 220 is configured to attach to the electronic module 230 and the filter 210 and provide structural support thereto. The filter head 220 may additionally include a mounting structure configured to mount the filter head 220 to a chassis containing an engine and a fuel tank.

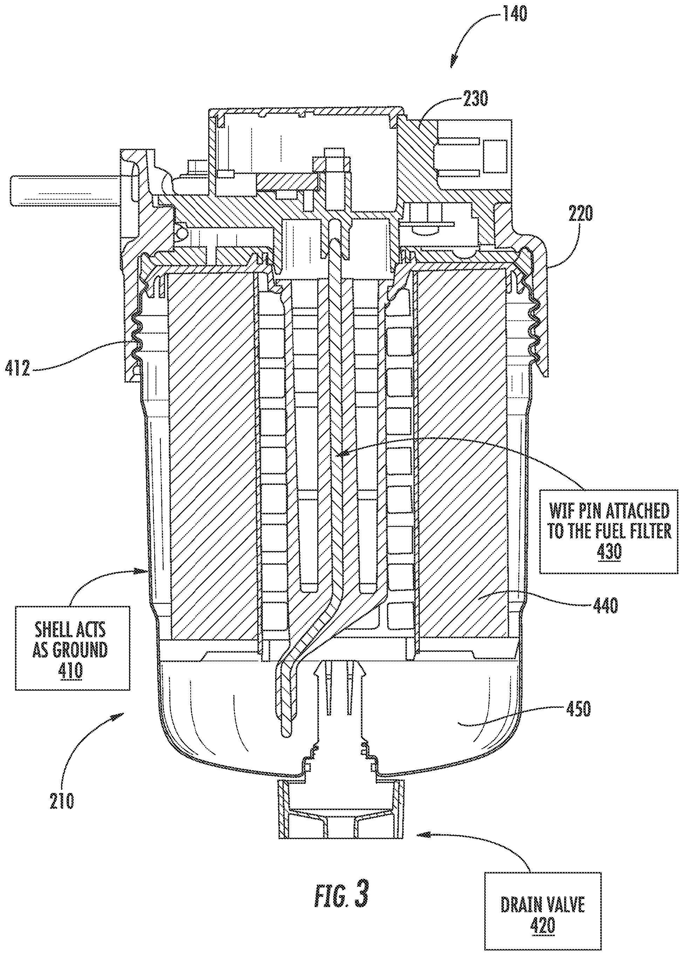

The filter 210 may be any suitable filter element. As shown in Fig. 3, the filter 210 may be a spin-on filter that includes a filter shell 410, filter media 440, and a drain valve 420. The filter media 440 may be any suitable filter media, such as a pleated filter media. A water reservoir 450 may be provided in the filter 210 below the filter media 440, and may be configured to collect and store water that is separated from the fuel by the fuel water separator filter. The filter shell 410 includes an attachment structure 412 configured to attach the filter 210 to the filter head 220. The attachment structure 412 may be a threaded connection, a twist-lock connection, or a bayonet connection. The filter shell 410 may be formed from any suitable material, such as a conductive metal material.

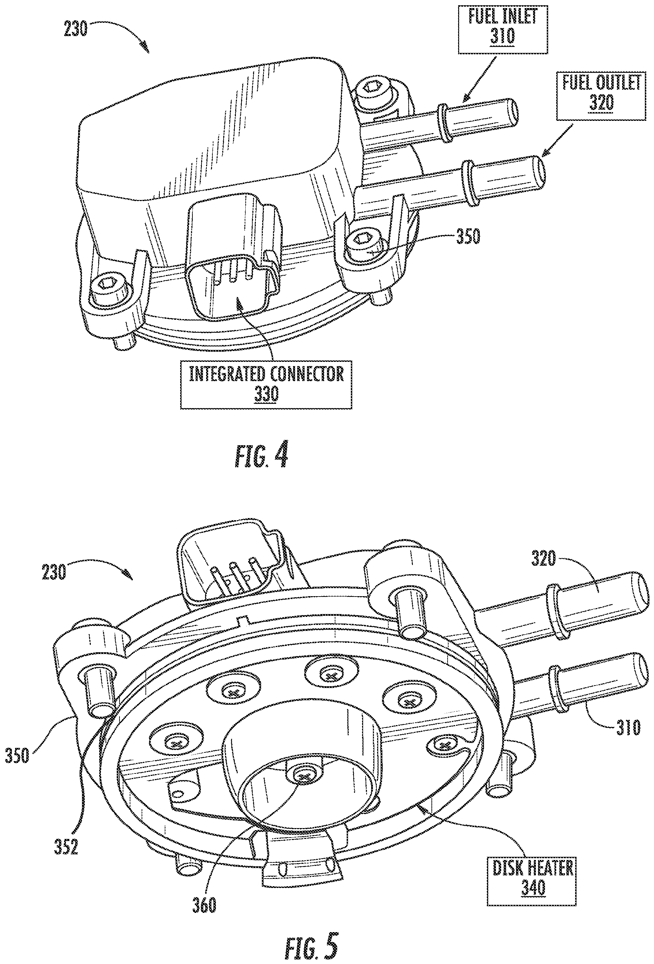

As shown in Figs. 4 and 5, the electronic module 230 may include an integrated electrical connector 330, a fuel inlet 310, a fuel outlet 320, and a fuel heater 340. The electronic module 230 is configured to be attached to the filter head 220 by an attachment mechanism, such as by screws or bolts 350. The electronic module 230 includes a seal 352 that is configured to seal against a surface of the filter head 220 when the electronic module is attached to the filter head. The seal 352 may be any appropriate structure, such as an o-ring. The electronic module 230 is configured to supply fuel from the fuel inlet 310 to an unfiltered fuel region of the filter 210, and receive fuel from a filtered fuel region of the filter 210 such that the filtered fuel may flow out of the fuel outlet 320. The fuel heater 340 is configured to heat fuel that flows through the electronic module 230 and filter 210. According to one embodiment, the fuel heater 340 may be a disk type heater. The heating of the fuel may prevent gelation of the fuel, particularly in low-temperature environments. The electronic module 230 may be formed from any suitable material by any appropriate process, such as from a polymer material by a casting or molding process.

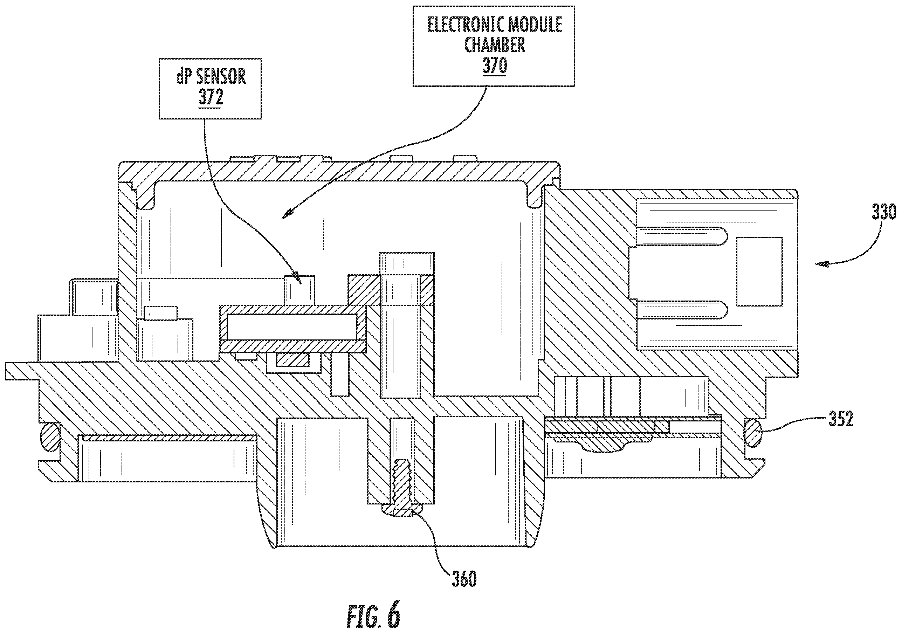

The electronic module 230 includes an electronic module chamber 370. As shown in Fig. 6, the electronic module chamber 370 may include a differential pressure sensor 372. The differential pressure sensor 372 may be configured to measure the pressure difference between the fuel on the inlet side of the fuel water separator filter 140 and the fuel on the outlet side of the fuel water separator filter. The output of the differential pressure sensor 372 is supplied to the integrated electrical connector 330 by an electrical connection. The electronic module 230 may also include a contact 360 configured to electrically communicate with a water-in-fuel sensor pin 430 of the filter 210. The contact 360 is configured to electrically connect the integrated electrical connector 330 with the water-in-fuel sensor pin 430 when the filter 210 is installed in the filter head 220. According to one embodiment, the contact 360 may be a metallic contact, such as a metallic screw installed in the electronic module 230 that is configured to abut the water-in-fuel sensor pin 430.

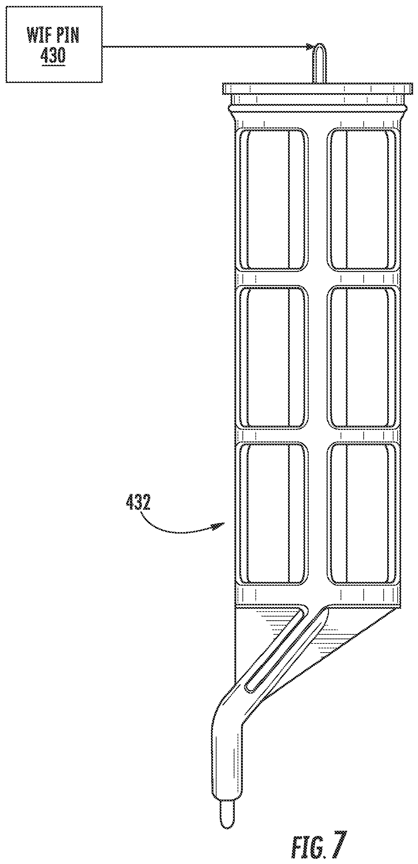

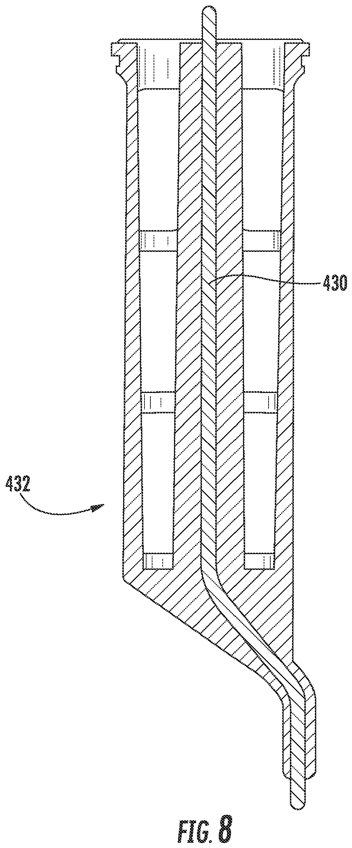

As shown in Figs. 7 and 8, the water-in-fuel sensor pin 430 may be disposed within a pin support structure 432. The pin support structure 432 may be a center tube disposed within the filter 210. The pin support structure 432 may also support a strainer configured to remove any residual water from the fuel before the filtered fuel exits the fuel water separator filter, such as a hydrophobic mesh screen. The water-in-fuel sensor pin 430 may be configured to extend from the electronic module 230 through the center of the filter media 440 to the water reservoir 450. The end of the water-in-fuel sensor pin 430 may be disposed a distance from the bottom surface of water reservoir 450 associated with a water level at which water should be drained from the water reservoir, such as via the drain valve 420.

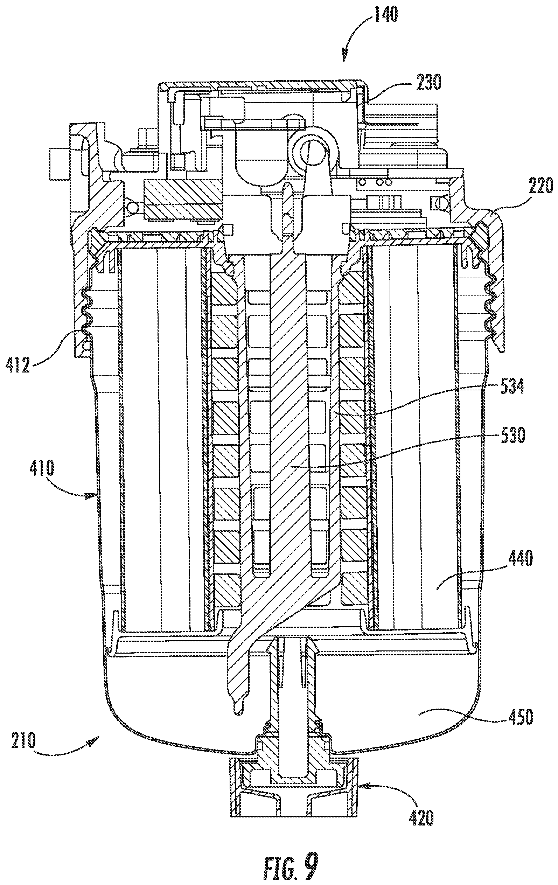

An alternative water-in-fuel sensor may be employed in the fuel water separator that does not include a metal pin. As shown in Fig. 9, a water-in-fuel sensor 530 may be employed that does not include a metal pin. The water-in-fuel sensor 530 may be formed from a conductive material, such that a separate conductive pin is not required. The water-in-fuel sensor 530 may include a strainer 534 that is configured to remove any residual water from the fuel before the filtered fuel exits the fuel water separator filter. The strainer 534 may be a center tube disposed within the filter 210. The water-in-fuel sensor 530 and strainer 534 may be formed from an electrically conductive polymer, such as a plastic material that includes conductive carbon particles. The water-in-fuel sensor 530 and strainer 534 may be formed together in a single forming process, and may both be formed from a hydrophobic electrically conductive polymer or plastic. The water-in-fuel sensor 530 may be configured to extend from the electronic module 230 through the center of the filter media 440 to the water reservoir 450. The end of the water-in-fuel sensor 530 may be disposed a distance from the bottom surface of water reservoir 450 associated with a water level at which water should be drained from the water reservoir, such as via the drain valve 420. Other than not including a metal pin, the water-on-fuel sensor 530 may function similarly to the water-in-fuel sensor pin 430. Utilizing a water-in-fuel sensor that does not include a metal pin reduces the cost and complexity of the water-in-fuel sensor.

The combination of sensors included in the fuel water separator system allows the comprehensive monitoring and management of the system by a control module. According to one embodiment, the control module may be an engine control unit (ECU). The control module may include a processor and memory, and may be connected to an electrical connector on the first fuel water separator filter. The electrical connector may include multiple connection pathways configured to convey sensor signals and/or electrical power, with each pathway being associated with a different sensor or heating element of the first fuel water separator filter. The electrical connector may include a 5 volt power supply pin.

The fuel water separator system may be configured such that the sensors included in the first fuel water separator may monitor the filter life of the entire system, including the second fuel water separator filter. To facilitate the monitoring of the filter life of the filter system, the first fuel water separator filter may be configured to reach an end of its useful life, by becoming clogged, before the second fuel water separator filter when the system is in operation. A pressure drop across the first fuel water separator, such as measured by a differential pressure sensor located therein, indicates the filter life of the entire system because the first fuel water separator filter will always have more remaining life than the second fuel water separator filter. A life of a fuel water separator filter with no life remaining may be indicated by a pressure drop across the filter exceeding a predetermined value.

The water-in-fuel sensor of the first fuel water separator filter is configured to determine when a water level in a water reservoir of the fuel water separator exceeds a predetermined value. The water-in-fuel separator includes a metal pin which is configured to connect to the electronic module when the filter is installed in the fuel water separator filter. The metal pin may be spring loaded such that an electrical contact is reliably established between the metal pin and a contact on the electronic module when the filter is installed in the fuel water separator. The metal pin is connected to a positive terminal of a power supply, such as a 5 volt power supply, and the filter shell may make contact with a ground of the control module via the filter head and chassis or with a ground of the heater element. Contact of the filter shell and the ground of the heater element may be achieved via a flexible clip provided on the heater disc. In cases where two heater discs are present in the fuel water separator filter, the flexible clip may be provided on one of the heater discs.

When the metal pin comes in to contact with the water separated from the fuel that collects in the water reservoir of the fuel water separator filter, a connection is made from the metal pin to the filter shell through the water, and the control module recognizes that the water level has reached a predetermined level. A signal, such as a light, may then be provided to a user indicating that the water should be drained from the fuel water separator filter via a drain valve. Seals may be provided where the metal pin of the water-in-fuel sensor contacts the electronic module to prevent fuel from entering an electronic control chamber. The configuration of the water-in-fuel sensor prevents leaks from the fuel water separator filter by allowing the use of a filter shell without any external leak paths.

The fuel heater is provided on a filter side of the electronic module. Two electrical contact pins of the fuel heater may be connected to the electronic module. Seals may be provided where the electrical contact pins meet the electronic module to prevent fuel from entering the electronic module chamber.

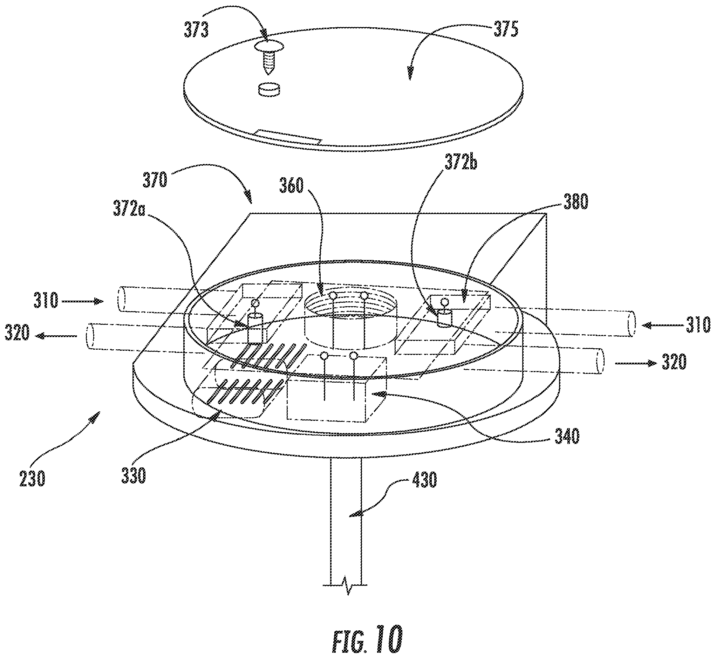

As shown in FIG. 10, an electronic intermediary 380 may be provided in the electronic module 230 of the fuel water separator filter. The electronic intermediary 380 allows the use of a single integrated electrical connector 330 to transfer signals and/or power from the sensors of the fuel water separator filter to the control module. The electronic intermediary 380 may be provided in the electronic module chamber 370 provided in the electronic module 230. The use of a single interconnected connector 330 simplifies the user interaction with the device, by providing a single electrical touch point on the fuel water separator filter. Additionally, the use of an integrated connector 330 may prevent the use of counterfeit products with the fuel water separator system that may be of low quality and result in damage to the system and/or engine.

The electronic intermediary 380 may comprise a printed circuit board (PCB) 385. The PCB 385 may be connected to the heater 340, the water-in-fuel sensor 430, and the differential pressure sensor 372 by soldering connections. Alternatively, any other appropriate electrical connection between the electronic intermediary 380 and the heater 340, water-in-fuel sensor 430, and the differential pressure sensor 372 may be employed. As shown in FIG. 10, the differential pressure sensor 372 may include an inlet pressure sensing element 372a positioned at the fuel inlet 310 and an outlet pressure sensing element 372b positioned at the fuel outlet 320, each of which are electrically connected to the PCB 385. A cap 375 may be placed over the PCB 385 and the electronic components to enclose the electronic module chamber 370. An attachment mechanism, such as screws or bolts 373, may secure the cover 375 in place in order to hold the PCB 385 and electronic components within the electronic module chamber 370.

The integrated electrical connector 330 is connected to the electronic intermediary 380 and may be any appropriate integrated electrical connector, such as a 4-pin or a 6-pin electrical connector. The integrated electrical connector 330 may be connected to the electronic intermediary 380 by any appropriate connection, such as a soldering connection or a spring connection. According to one embodiment shown in FIG. 10, the integrated electrical connector 330 may be a 6-pin connector, and the pins may correspond to a heater voltage, a heater ground, a water-in-fuel sensor voltage, a differential pressure sensor voltage, a differential pressure sensor power, and a ground shared by the differential pressure sensor and the water-in-fuel sensor.

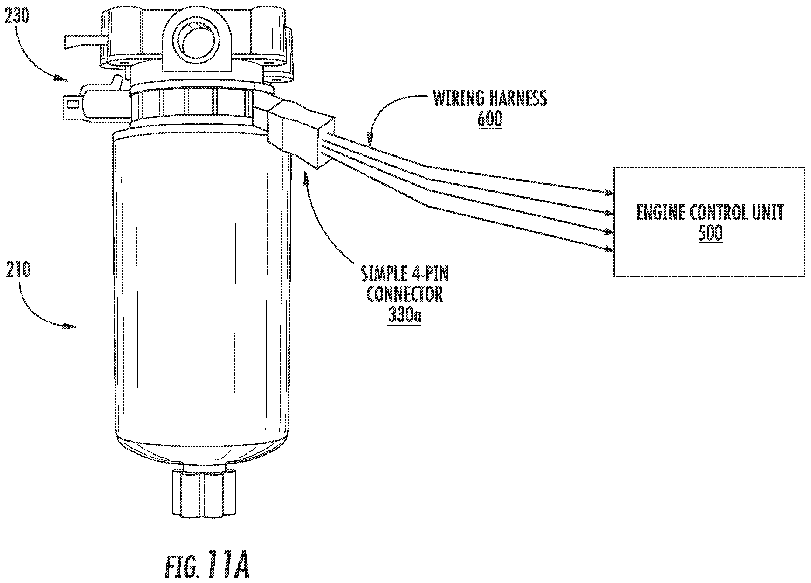

As shown in FIG. 11A, in an alternative embodiment, the electronic module 230 may include an electronic intermediary, which may be in the form of the PCB 385 described above, that includes a controller area network (CAN) transceiver integrated circuit chip to convert the voltages from the heater, water-in-fuel sensor, and differential pressure sensor. This allows for the connection of an integrated electrical connector 330a that may be reduced to a 4-pin connector, which may communicate with the control module, such as an ECU 500, via wiring harness 600 using any appropriate industry standard protocol, such as SAE J1939. The pins may correspond to a CAN Hi voltage, a CAN Lo voltage, a power and a ground. Incorporating a CAN-based connection with a 4-pin connector in the electronic module may allow for existing analog circuitry on the ECU to be preserved by freeing up two analog channels in the ECU and eliminating the need for two additional wiring harnesses and connectors as compared to the 6-pin electrical connector described above.

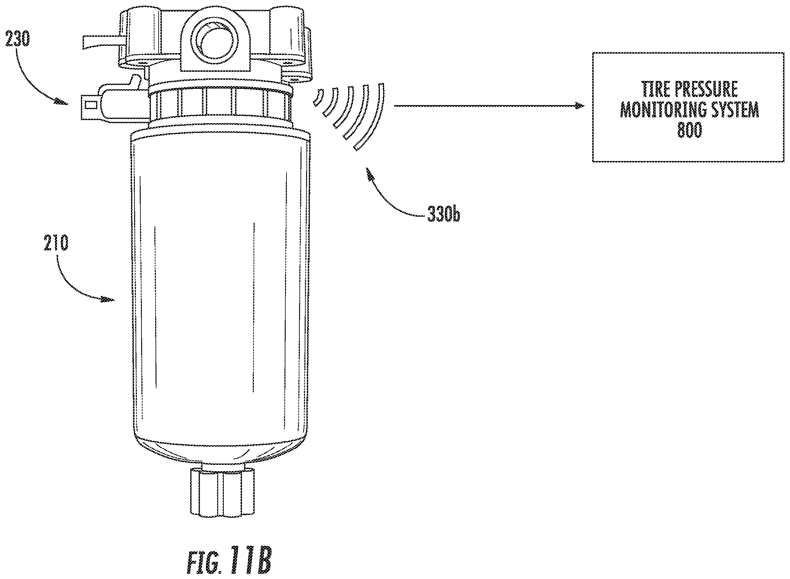

As shown in FIG. 11B, according to an alternative embodiment, the electronic intermediary may include a wireless transmitter 330b configured to communicate the state of the heater, water-in-fuel sensor, and differential pressure sensor. The wireless transmitter may be built into the housing. The wireless transmitter may be a radio frequency (RF) transmitter, such as an ultra-high frequency (UHF) RF transmitter or a RF transmitter configured to communicate with a RF receiver of a vehicle. The wireless transmitter may be configured to broadcast signals received from the sensors over an RF-active, UHF range. The wireless transmitter may be incorporated into already existing wireless monitoring systems of a vehicle. For example, the wireless transmitter may be configured to communicate with a vehicle's tire pressure monitoring system 800. The tire pressure monitoring system 800 may be configured to accept feeds from the sensors via the wireless transmitter. This may allow for further connection to a vehicle's electronic information system in order to communicate the state of the sensors to a vehicle driver in real-time, such as through the vehicle's dashboard display. In such an embodiment, a two-pin electrical connector may be employed, including power and ground connections for the heater.

## Claims

1. A fuel water separator filter system (100), comprising:
a first fuel water separator filter (140) configured to be mounted to a chassis of a vehicle and receiving fuel from a fuel tank (110), the first fuel water separator filter (140) including:
a filter head (220);
a filter (210) removably coupled to the filter head (220), the filter (210) comprising:
a filter shell (410),
a filter media (440) disposed within the filter shell (410), and
a water-in-fuel sensor (430, 530) disposed within the filter shell (410), and
an electronic module (230) attached to the filter head (220) of the first fuel water separator filter (140), the electronic module (230) including:
an electronic module chamber (370) comprising a fuel inlet (310) configured to receive fuel and a fuel outlet (320) configured to expel the fuel after being filtered by the filter (210),
a differential pressure sensor (372) disposed within the electronic module chamber (370),
a fuel heater (340), an electrical contact (360) disposed in the electronic module chamber (370) and configured to be electrically coupled to the water-in-fuel sensor (430, 530) when the filter (210) is coupled to the filter head (220), and
a second fuel water separator filter (150) configured to be mounted to an engine (130), the first fuel water separator filter (140) supplying filtered fuel to the second fuel water separator filter (150), and the second fuel water separator filter (150) supplying filtered fuel to an engine (130);
wherein the first fuel water separator (140) is disposed upstream of the second fuel water separator (150).

2. The fuel water separator filter system (100) of claim 1, wherein the electric contact (360) is configured to electrically communicate with a spring loaded water-in-fuel sensor pin (430) of the filter (210) when the filter (210) is installed in a filter head (220), wherein the contact (360) is a metallic contact installed in the electronic module (230) that is configured to abut the water-in-fuel sensor pin (430); and comprises
an electrical connector (330) configured to transfer power and/or signals between the differential pressure sensor (372), the fuel heater (340), and the contact (360) and a control module.

3. The fuel water separator filter system (100) of claim 2, wherein the control module comprises an engine control unit.

4. The fuel water separator filter system (100) of claim 2 or 3, wherein the fuel heater (340) is a disk type heater.

5. The fuel water separator filter system (100) of anyone of claims 2 to 4, wherein the electrical connector (330) comprises a six-pin connector.

6. The fuel water separator filter system (100) of anyone of claims 2 to 5, further comprising a controller area network transceiver configured to convert voltages of the differential pressure sensor (372), the fuel heater (340), and the water-in-fuel sensor (430, 530).

7. The fuel water separator filter system (100) of anyone of claims 2 to 6, further comprising a wireless transmitter configured to communicate a state of the differential pressure sensor (372), a state of the fuel heater (340), and a state of the water-in-fuel sensor (430, 530) to the control module.

8. The fuel water separator filter system (100) of claim 1, wherein the filter (210) further comprises :
a drain valve (420);
wherein the water-in-fuel sensor (430, 530) includes an end disposed a distance from the filter shell (410) associated with a predetermined volume of water stored in a water reservoir (450) of the filter shell (410).

9. The fuel water separator filter system (100) of claim of claim 8, wherein the end of the water-in-fuel sensor (430) includes a metal pin.

10. The fuel water separator filter system (100) of claim 9, wherein the metal pin is disposed within a pin support structure (432), the pin support structure (432) including a center tube and a strainer.

11. The fuel water separator filter system (100) of claim 8 to 10, wherein the end of the water-in-fuel sensor (430, 530) is disposed a distance from a bottom surface of the water reservoir (450).

12. The fuel water separator filter system (100) of anyone of claim 8 to 11, wherein the water-in-fuel sensor (530) includes a center tube and a strainer (534), the center tube and the strainer (534) formed of an electrically conductive polymer.

13. The fuel water separator filter system (100) of claim 12, wherein the strainer (534) comprises a hydrophobic mesh screen.

## Patentansprüche

1. Brennstoff-Wasser-Abscheiderfiltersystem (100), Folgendes umfassend:
einen ersten Brennstoff-Wasser-Abscheiderfilter (140), welcher konfiguriert ist, um an einem Fahrgestell eines Fahrzeugs montiert zu werden und um Brennstoff aus einem Brennstofftank (110) aufzunehmen, wobei der erste Brennstoff-Wasser-Abscheiderfilter (140) Folgendes einschließt:
einen Filterkopf (220);
einen Filter (210), welche abnehmbar mit dem Filterkopf (220) gekoppelt ist, wobei der Filter (210) Folgendes umfasst:
einen Filtermantel (410),
ein Filtermedium (440), welches innerhalb des Filtermantels (410) angeordnet ist, und
einen Wasser-in-Kraftstoff-Sensor (430, 530), welcher innerhalb des Filtermantels (410) angeordnet ist, und
ein elektronisches Modul (230), welches am Filterkopf (220) des ersten Brennstoff-Wasser-Abscheiderfilters (140) befestigt ist, wobei das elektronische Modul (230) Folgendes einschließt:
eine Kammer (370) eines elektronischen Moduls, welche einen Brennstoffeinlass (310) umfasst, welcher konfiguriert ist, um Brennstoff aufzunehmen und einen Brennstoffauslass (320), welcher konfiguriert ist, um den Brennstoff nach der Filterung durch den Filter (210) auszustoßen,
einen Differenzialdrucksensor (372), welcher innerhalb der Kammer (370) des elektronischen Moduls angeordnet ist,
einen Brennstofferhitzer (340), wobei ein elektrischer Kontakt (360) in der Kammer des elektronischen Moduls (370) angeordnet und konfiguriert ist, um elektrisch mit dem Wasser-in-Kraftstoff-Sensor (430, 530) gekoppelt zu werden, wenn der Filter (210) mit dem Filterkopf (220) gekoppelt ist, und
einen zweiten Brennstoff-Wasser-Abscheiderfilter (150), welcher konfiguriert ist, um an einem Motor (130) montiert zu werden, wobei der erste Brennstoff-Wasser-Abscheiderfilter (140) gefilterten Brennstoff an den zweiten Brennstoff-Wasser-Abscheiderfilter (150) bereitstellt, und der zweite Brennstoff-Wasser-Abscheiderfilter (150) gefilterten Brennstoff an einen Motor (130) bereitstellt;
wobei der erste Brennstoff-Wasser-Abscheiderfilter (140) im vorgelagerten Bereich des zweiten Brennstoff-Wasser-Abscheiderfilters (150) angeordnet ist.

2. Brennstoff-Wasser-Abscheiderfiltersystem (100) nach Anspruch 1, wobei der elektrische Kontakt (360) konfiguriert ist, um elektrisch mit einem federbelasteten Wasser-in-Kraftstoff-Sensorstift (430) des Filters (210) zu kommunizieren, wenn der Filter (210) in einem Filterkopf (220) installiert ist, wobei der Kontakt (360) ein metallischer Kontakt ist, welcher in dem elektronischen Modul (230) installiert ist, welcher konfiguriert ist, um an den Wasser-in-Kraftstoff-Sensorstift (430) anzustoßen; und welches Folgendes umfasst:
einen elektrischen Verbinder (330), welcher konfiguriert ist, um Strom und/oder Signale zwischen dem Differenzialdrucksensor (372), dem Brennstofferhitzer (340), dem Kontakt (360) und einem Steuermodul zu übertragen.

3. Brennstoff-Wasser-Abscheiderfiltersystem (100) nach Anspruch 2, wobei das Steuermodul eine Motorsteuerungseinheit umfasst.

4. Brennstoff-Wasser-Abscheiderfiltersystem (100) nach Anspruch 2 oder 3, wobei der Brennstofferhitzer (340) ein Plattenerhitzer ist.

5. Brennstoff-Wasser-Abscheiderfiltersystem (100) nach einem der Ansprüche 2 bis 4, wobei der elektrische Verbinder (330) einen Verbinder mit sechs Stiften umfasst.

6. Brennstoff-Wasser-Abscheiderfiltersystem (100) nach einem der Ansprüche 2 bis 5, ferner umfassend einen Controller Area Network Transceiver, welcher konfiguriert ist, um Spannungen des Differenzialdrucksensors (372), des Brennstofferhitzers (340) und des Wasser-in-Kraftstoff-Sensors (430, 530) umzuwandeln.

7. Brennstoff-Wasser-Abscheiderfiltersystem (100) nach einem der Ansprüche 2 bis 6, ferner umfassend einen drahtlosen Übertrager, welcher konfiguriert ist, um einen Zustand des Differenzialdrucksensors (372), einen Zustand des Brennstofferhitzers (340) und einen Zustand des Wasser-in-Kraftstoff-Sensors (430, 530) an das Steuermodul zu kommunizieren.

8. Brennstoff-Wasser-Abscheiderfiltersystem (100) nach Anspruch 1, wobei der Filter (210) ferner Folgendes umfasst:
ein Ablassventil (420);
wobei der Wasser-in-Kraftstoff-Sensor (430, 530) ein Ende einschließt, welches von dem Filtermantel (410) in einem Abstand angeordnet ist, welcher mit einem vorbestimmten Volumen an Wasser verbunden ist, welches in einem Wasserspeicher (450) des Filtermantels (410) gespeichert ist.

9. Brennstoff-Wasser-Abscheiderfiltersystem (100) nach Anspruch 8, wobei das Ende des Wasser-in-Kraftstoff-Sensors (430) einen Metallstift einschließt.

10. Brennstoff-Wasser-Abscheiderfiltersystem (100) nach Anspruch 9, wobei der Metallstift innerhalb einer Stifthalterungsstruktur (432) angeordnet ist, wobei die Stifthalterungsstruktur (432) eine mittlere Röhre und einen Saugkorb einschließt.

11. Brennstoff-Wasser-Abscheiderfiltersystem (100) nach Anspruch 8 bis 10, wobei das Ende des Wasser-in-Kraftstoff-Sensors (430, 530) in einem Abstand von einer Bodenfläche des Wasserspeichers (450) angeordnet ist.

12. Brennstoff-Wasser-Abscheiderfiltersystem (100) nach einem der Ansprüche 8 bis 11, wobei der Wasser-in-Kraftstoff-Sensor (530) eine mittlere Röhre und einen Saugkorb (534) einschließt, wobei die mittlere Röhre und der Saugkorb (534) aus einem elektrisch leitfähigen Polymer gebildet sind.

13. Brennstoff-Wasser-Abscheiderfiltersystem (100) nach Anspruch 12, wobei der Saugkorb (534) ein hydrophobes Maschensieb umfasst.

## Revendications

1. Système de filtre séparateur de carburant/eau (100), comprenant :
un premier filtre séparateur de carburant/eau (140) qui est configuré pour être monté sur un châssis d'un véhicule et pour recevoir du carburant en provenance d'un réservoir de carburant (110), le premier filtre séparateur de carburant/eau (140) incluant :
une tête de filtre (220) ;
un filtre (210) qui est couplé de façon amovible à la tête de filtre (220), le filtre (210) comprenant :
une coque de filtre (410) ;
un milieu de filtration (440) qui est disposé à l'intérieur de la coque de filtre (410) ; et
un capteur d'eau dans le carburant (430, 530) qui est disposé à l'intérieur de la coque de filtre (410) ; et
un module électronique (230) qui est fixé à la tête de filtre (220) du premier filtre séparateur de carburant/eau (140), le module électronique (230) incluant :
une chambre de module électronique (370) qui comprend une entrée de carburant (310) qui est configurée pour recevoir du carburant et une sortie de carburant (320) qui est configurée pour expulser le carburant après qu'il a été filtré par le filtre (210) ;
un capteur de pression différentielle (372) qui est disposé à l'intérieur de la chambre de module électronique (370) ; et
un dispositif de chauffage de carburant (340), un contact électrique (360) qui est disposé à l'intérieur de la chambre de module électronique (370) et qui est configuré pour être couplé électriquement au capteur d'eau dans le carburant (430, 530) lorsque le filtre (210) est couplé à la tête de filtre (220) ; et
un second filtre séparateur de carburant/eau (150) qui est configuré pour être monté sur un moteur (130), le premier filtre séparateur de carburant/eau (140) alimentant du carburant filtré sur le second filtre séparateur de carburant/eau (150), et le second filtre séparateur de carburant/eau (150) alimentant du carburant filtré sur un moteur (130) ;
dans lequel le premier filtre séparateur de carburant/eau (140) est disposé en amont du second filtre séparateur de carburant/eau (150).

2. Système de filtre séparateur de carburant/eau (100) selon la revendication 1, dans lequel le contact électrique (360) est configuré pour communiquer électriquement avec une broche de capteur d'eau dans le carburant chargée par ressort (430) du filtre (210) lorsque le filtre (210) est installé dans une tête de filtre (220), dans lequel le contact (360) est un contact métallique qui est installé dans le module électronique (230) et qui est configuré pour venir en butée contre la broche de capteur d'eau dans le carburant (430) ; et comprend
un connecteur électrique (330) qui est configuré pour transférer de l'énergie électrique et/ou des signaux entre le capteur de pression différentielle (372), le dispositif de chauffage de carburant (340), et le contact (360) et un module de commande.

3. Système de filtre séparateur de carburant/eau (100) selon la revendication 2, dans lequel le module de commande comprend une unité de commande de moteur.

4. Système de filtre séparateur de carburant/eau (100) selon la revendication 2 ou 3, dans lequel le dispositif de chauffage de carburant (340) est un moyen de chauffage du type à disque.

5. Système de filtre séparateur de carburant/eau (100) selon l'une quelconque des revendications 2 à 4, dans lequel le connecteur électrique (330) comprend un connecteur à six broches.

6. Système de filtre séparateur de carburant/eau (100) selon l'une quelconque des revendications 2 à 5, comprenant en outre un émetteur-récepteur de réseau de zone de contrôleur qui est configuré pour convertir des tensions du capteur de pression différentielle (372), du dispositif de chauffage de carburant (340) et du capteur d'eau dans le carburant (430, 530).

7. Système de filtre séparateur de carburant/eau (100) selon l'une quelconque des revendications 2 à 6, comprenant en outre un émetteur sans fil qui est configuré pour communiquer un état du capteur de pression différentielle (372), un état du dispositif de chauffage de carburant (340) et un état du capteur d'eau dans le carburant (430, 530) au module de commande.

8. Système de filtre séparateur de carburant/eau (100) selon la revendication 1, dans lequel le filtre (210) comprend en outre :
une soupape de drainage (420) ;
dans lequel le capteur d'eau dans le carburant (430, 530) inclut une extrémité qui est disposée à distance de la coque de filtre (410) et qui est associée à un volume d'eau prédéterminé qui est stocké dans un réservoir d'eau (450) de la coque de filtre (410).

9. Système de filtre séparateur de carburant/eau (100) selon la revendication 8, dans lequel l'extrémité du capteur d'eau dans le carburant (430) inclut une broche en métal.

10. Système de filtre séparateur de carburant/eau (100) selon la revendication 9, dans lequel la broche en métal est disposée à l'intérieur d'une structure de support de broche (432), la structure de support de broche (432) incluant un tube central et un moyen de crépine.

11. Système de filtre séparateur de carburant/eau (100) selon l'une quelconque des revendications 8 à 10, dans lequel l'extrémité du capteur d'eau dans le carburant (430, 530) est disposée à distance d'une surface de fond du réservoir d'eau (450).

12. Système de filtre séparateur de carburant/eau (100) selon l'une quelconque des revendications 8 à 11, dans lequel le capteur d'eau dans le carburant (530) inclut un tube central et un moyen de crépine (534), le tube central et le moyen de crépine (534) étant formés à partir d'un polymère électriquement conducteur.

13. Système de filtre séparateur de carburant/eau (100) selon la revendication 12, dans lequel le moyen de crépine (534) comprend un moyen de tamisage maillé hydrophobe.
